# EUROPEAN PATENT APPLICATION

(11) **EP 2 268 087 A2**
(43) Date of publication of application: **29.12.2010**
(21) Application number: 10165762.5
(22) Date of filing: 11.06.2010
(51) Int. Cl.: H04W 52/14, H04W 52/26

(54) **Mobile radio communication system**

(30) Priority: 25.06.2009 JP 2009151408
(71) Applicant: Fujitsu Limited, Kawasaki-shi, Kanagawa 211-8588 (JP)
(72) Inventor: Murata, Syuuichi, Kawasaki-shi Kanagawa 211-8588 (JP); Tomiyoshi, Norio, Kawasaki-shi Kanagawa 211-8588 (JP)
(74) Representative: Lewin, David Nicholas

(57) **Abstract**

Amobile station is applied to a mobile radio communication system including a transmission control function. The mobile station includes means for determining a gradient, on data to be uploaded which is input from an upper layer and transmitted through an uplink data channel in a direction toward a base transceiver station, based on a relation in chronological change of transmission data amount per predetermined time; means for judging that, when detecting that the gradient has become smaller than a predetermined threshold value, the transmission data amount is decreased; and means for instructing a lower layer, in a state where Happy bit information transmitted through an uplink control channel continuously takes a first value for requesting an increase of a transmission power, to change the first value to a second value for maintaining or decreasing the transmission power.

## Description

### FIELD

The disclosures made herein relate to a mobile radio communication system.

### BACKGROUND

A radio communication technology supporting a third-generation mobile radio communication system includes, for example, W-CDMA (Wideband Code Division Multiple Access), which is wider in bandwidth than CDMA (Code Division Multiple Acccss).

W-CDMA is standardized by a standardization organization, 3GPP (3rd Generation Partnership Project), in 1999. 3GPP produced the first technical specifications of W-CDMA as Release 1999. At present, Release 4 and Release 5 are defined as new versions, and the standardization of Release 6 is underway.

Release 5 additionally employs a high speed downlink packet access (HSDPA) technology. HSDPA is a technology for enabling high-speed downlink packet transmission in the direction from a base station to a mobile station. However, as regards the uplink transmission in the direction from a mobile station to the base station, the specifications of Release 1999 were applied without change. As a result, in a case of transmitting data of high traffic density, such as packet data, from a mobile station to the base station, a dedicated channel (DCH) and a dedicated physical data channel (DPDCH) have to be allocated to each mobile station all the time, which leads to a problem in view of effective utilization of radio resources in the base station.

In Release 6, an enhanced-dedicated channel (E-DCH) technology is introduced in order to make an effective use of the radio resources and to attain high-speed allocation of the radio resources, and detailed specifications thereof are defined.
According to the E-DCH technology, high speed uplink packet access (HSUPA), which is a technology of enabling high-speed uplink transmission in the direction from a mobile station to the base station, is additionally employed. Further, in the E-DCH technology, a short transmission time interval (TTI) was made available as well as such technologies as an adaptive modulation and coding (AMC) technology and a hybrid automatic repeat request (HARQ), which were also employed in the HSDPA technology introduced in Release 5.

Next, major channels related to the specifications of 3GPP Release 6 are described. In 3GPP Release 6, an enhanced-dedicated physical data channel (E-DPDCH) serving as a data channel and an enhanced-dedicated physical control channel (E-DPCCH) serving as a control channel are additionally employed as the E-DCH, physical channels in the uplink in the direction from a mobile station to the base station in HSUPA.

The E-DPDCH and the E-DPDCH are physical channels each corresponding to the DPDCH and the DPCCH, respectively. The DPDCH and the DPCCH are physical channels employed in Release 5 and earlier versions. The E-DPDCH transmits HSUPA data (user data) from an upper layer (upper protocol layer) and the E-DPCCH transmits HSUPA control information. The E-DPDCH and the E-DPCCH transmit the HSUPA data and the HSUPA control information in the same phase (pair).

Further, Release 6 additionally employs, as physical channels in the downlink in the direction from the base station to a mobile station for the E-DCH, an enhanced-absolute grant channel (E-AGCH) and an enhanced-relative grant channel (E-RGCH) which are for notifying scheduling result in the base station, and E-HICH (an E-DCH HARQ Acknowledgement Indicator Channel) for notifying a judgment result of packet data reception in the base station.

Here, a maximum transmission power to be granted, that is, a power ratio between the uplink physical channels, namely, the E-DPDCH and the E-DPCCH, is notified through the E-AGCH. Notified through E-RGCH is an increase (UP) or a decrease (DOWN) within a certain range, or maintenance (HOLD) in the granted transmission power. Further, notified through the E-HICH is normal reception (ACK) or abnormal reception (NACK) indicating whether or not user data transmitted through the E-DPDCH has been normally received in the base station.

The E-DPCCH for transmitting the HSUPA control information has a slot structure containing 10 bits per slot, and the 10 bits include information defined as follows.
(1) Retransmission sequence number (RSN): Xrsn1, Xrsn2
(2) Enhanced-transport format combination indicator (E-TFCI) :
   Xtfci1, Xtfci2 to Xtfci7
(3) Happy bit: Xh1

Here, the RSN stands for a retransmission sequence number of 2 bits used in a rate matching process. The E-TFCI is an indicator of 7 bits indicating a transport block size. The E-TFC defines a transmission rate of E-DCH transmission. Happy bit is 1-bit information indicative of whether or not the uplink radio resources are further available for amobile station. When the Happy bit information is "1", the information indicates a "Happy" state where nomore uplink radio resources are available, while when the Happy bit information is "0", the information indicates an "UnHappy" state where the uplink radio resources are further available.

A mobile station transmits "UnHappy" information to the base station when the following three conditions are satisfied. When those conditions are not satisfied, the mobile station transmits "Happy" information to the base station.
Condition A: The mobile station is transmitting uplink data at a maximum transmission power granted by absolute grant (AG) information and relative grant (RG) information.
Condition B: A maximum transmission power granted for the mobile station is larger than the transmission power granted by the condition A, and there still remains power which permits data transmission at higher speeds.
Condition C: In a case where a data length selected by the current serving grant (SG) control is consecutively transmitted in active processes, the transmission of the total data amount of the E-DCH accumulated in a transmission data buffer of the mobile station (TEBS: total E-DCH buffer state) may not be completed within a predesignated time.

In other words, the situation is defined as follows. That is, the mobile station has not reached a maximum transmission power defined therefor (condition B) while performing transmission at a maximum transmission power granted by the base station (condition A), and the mobile station nevertheless wants to increase the throughput of the uplink transmission data (condition C), the mobile station transmits "UnHappy" information to the base station.

The following is a related art to the invention.
[Patent document 1] Japanese Patent Laid-Open Publication No. JP 2008-182734

### SUMMARY

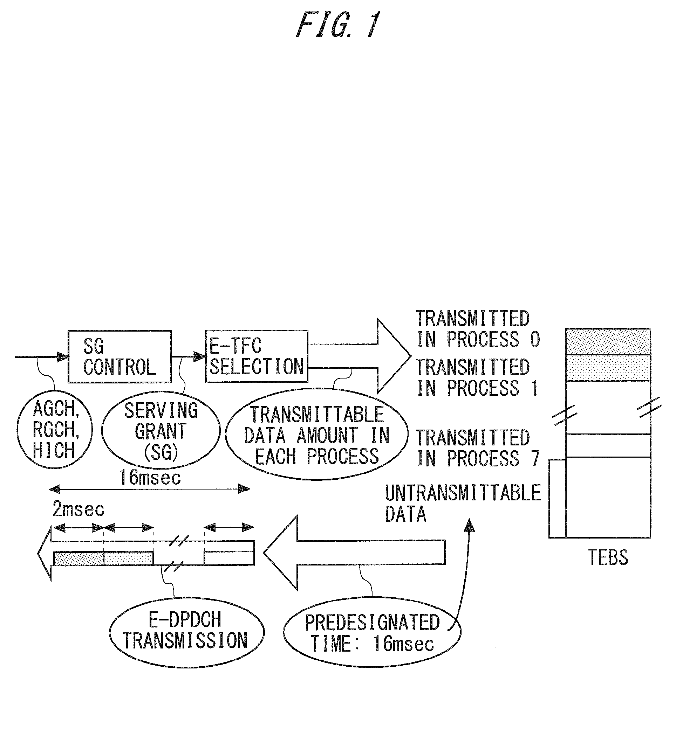

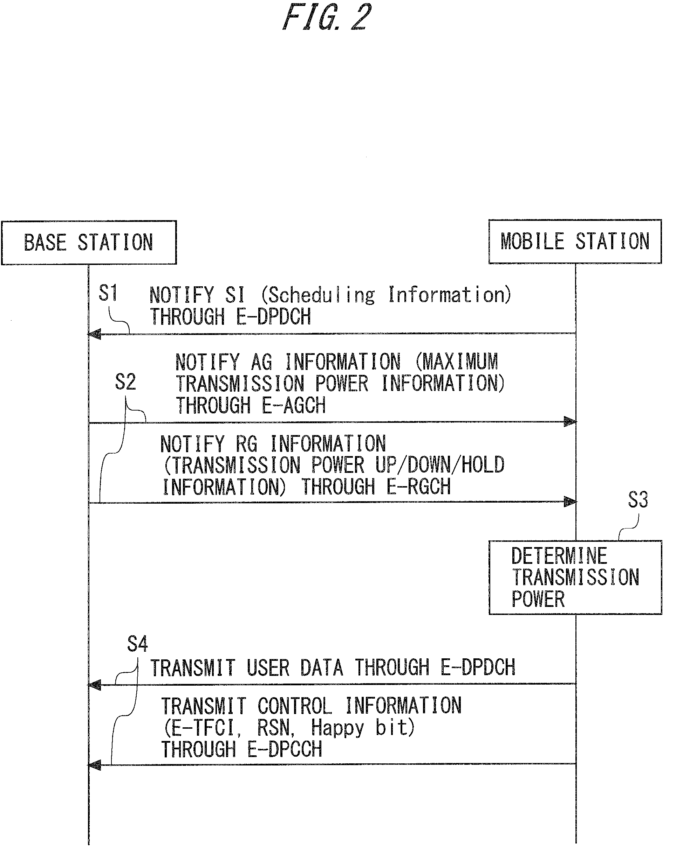

The mobile station transmits "UnHappy" information to the base station when the conditions A, B, and C are satisfied. If those conditions are not satisfied, the mobile station transmits "Happy" information to the base station. A specific example of this case is described with reference to FIGS. 1 and 2, which illustrate a mobile radio communication system to be improved.

Referring to FIG. 1, the mobile station receives AGCH information, RGCH information, and HICH information, through the physical channels in the downlink in the direction from the base station to the mobile station, namely, the E-AGCH, the E-RGCH, and the E-HICH, respectively. The power ratio SG between the physical channels in the uplink in the direction from the mobile station to the base station, namely, the E-DPDCH and the E-DPCCH, is determined through SG control based on the AGCH information and the RGCH information received. The mobile station is capable of identifying, based on the received HICH information, whether or not the data transmitted previously in the same process has been normally received by the base station.

E-TFC Selection is performed based on the SG information and an upper layer parameter, to thereby determine a data amount transmittable in each process. In this case, for example, in a case where the data transmission time interval TTI is 2 msec, eight processes from Process 0 to Process 7 are defined. One process is transmitted in 1 TTI (2 msec). It should be noted that TTI in the E-DCH may be 10 msec, which defines four processes from Process 0 to Process 3. The following description is given based on the assumption that all the processes from Process 0 to Process 7 are active processes (transmittable processes), the HICH information all includes ACK, and there is no retransmission data.

Here, a case is assumed where the predesignated time is designated as 16 msec, based on the upper layer parameter. In this case, data in total data amount TEBS should be transmitted in eight processes because 16 msec/2 msec=8. A data amount transmittable in one process is determined as a result of SG control and E-TFC selection at a certain time point. The condition C applies to a case where a total data amount to be transmitted in the eight processes, with each of the processes containing the data amount thus determined, does not cover the total data amount TEBS.

The condition A applies to a case where the data amount determined by the E-TFC selection at this time as transmittable in each process is equal to or less than the total data amount TEBS, and is being transmitted at the maximum transmission data amount granted by the SG control. In a case where the data amount transmittable in each process exceeds the total data amount TEBS, the data may be transmitted without using the maximum transmission data amount granted by the SG control. Here, the condition B applies to a case where the mobile station transmits the granted maximum transmission data amount with power which falls short of the maximum transmission power value defined for the mobile station.

FIG. 2 illustrates a transmission procedure by HSUPA.
S1: In a case where the mobile station has data to be transmitted through the E-DPDCH, the mobile station transmits to the base station scheduling information (SI) indicating the state of the mobile station regarding the amount of data to be transmitted and priority information on the transmission data, so as to request the allocation of radio resources.
S2: The base station compiles SI information transmitted from a plurality of mobile stations present in a radio zone (cell) under control of the base station, and makes scheduling for controlling the transmission data from the mobile station, based on the transmission quality of each of the mobile stations which have been monitored in advance and the priority information. As a result of the scheduling, the base station notifies transmission-grant information to each of the mobile stations. The transmission-grant information includes two kinds of information, that is, absolute grant information (AG information) and relative grant information (RG information), which are transmitted as beingmapped to information on the E-AGCH and the E-RGCH, respectively. The AG information notifies a maximum transmission power to be granted for the mobile station for transmission. The RG information notifies whether to increase (UP) or decrease (DOWN) the maximum transmission power notified by the AG information in a certain range or to maintain (HOLD) the transmission power value.
S3: The mobile station automatically controls (determines), based on the transmission-grant information notified by the base station, the transmission power values in the E-DPCCH and the E-DPDCH. The base station determines, based on both the Happy bit information and the SI information including the priority order of the transmission data transmitted from each of the mobile stations in the same cell under control, the final values of RG with respect to the mobile stations. At this time, in a case where an "UnHappy" instruction is given by a certain mobile station, the base station determines the value of RG so as to increase the transmission power of the mobile station. On the other hand, in a case where a "Happy" instruction is given by a certain mobile station, which indicates that the transmission power of the mobile station is appropriate, the base station therefore adjusts the value of RG so as to maintain the transmission power as it is of the mobile station.
S4: The value of RG to be instructed to the mobile station from the base station is notified as a result of the scheduling made by the base station on transmission powers to be granted to each of the mobile stations for transmission. The base station makes the scheduling based on the SI information notified from the mobile station to the base station before a call connection by HSUPA and a Happy bit transmitted through the E-DPCCH during the call connection by HSUPA. In a case where the UP instruction to increase a transmission power is given to a mobile station from the base station, the mobile station is allowed to transmit data at a larger power through the E-DPDCH and the E-DPCCH, and hence a large amount of user data is transmitted, leading to an increase in throughput in the uplink transmission. On the other hand, in a case where the DOWN instruction to decrease a transmission power is given to a mobile station, the transmission in the mobile station is limited to a smaller power, resulting in a decrease in throughput in the uplink transmission.

It should be noted that the base station transmits ACK or NACK, depending on whether or not the user data transmitted from the mobile station through the E-DPDCH to the base station has been normally received or not in the base station, by mapping ACK or NACK on the E-HICH. In a case the mobile station has receivedACK, the mobile station identifies that the transmission of the data has been completed and transmits the next data. In the case where the mobile station has received NACK, the mobile station identifies that the transmission of the data has not been completed and retransmits the same data.

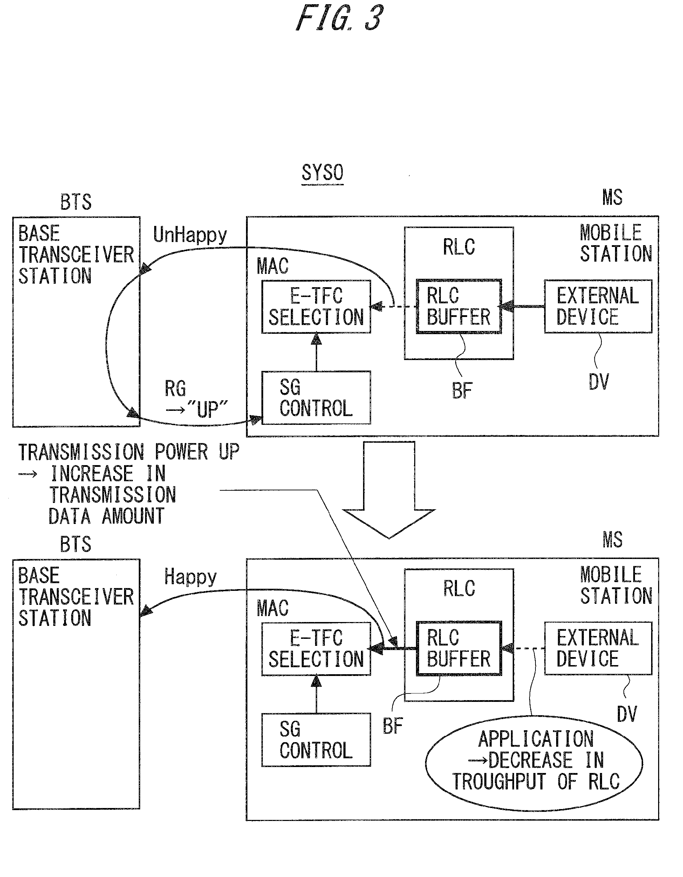

Referring to FIG. 3, in a mobile radio communication system SYS0 to which the HSUPA technology is applied, a mobile station MS transmits a Happy bit as "UnHappy" on the E-DPCCH, in a case where the mobile station MS is performing transmission at a transmission power equal to or smaller than the maximum transmission power defined for the mobile station and a large amount of data is accumulated in a transmission data buffer (RLC (radio link control) buffer) BF. In response to this, transmission-grant information RG for notifying to increase (UP) the transmission power of the mobile station MS is given to the mobile station MS from a base transceiver station BTS.

At this time, in a case where the mobile station MS, as being connected to an external device DV such as Bluetooth, has performed radio communication by HSUPA at a high rate of throughput and hence the throughput between the external device DV and the mobile station MS has decreased, retransmission control is performed by an upper layer higher than Layer 2, and therefore the throughput between the mobile station MS and the base transceiver station BTS is gradually normalized.

However, the mobile station MS performs data transmission at an excessive transmission power until the throughput is normalized, which increases interference (radio wave interference) to other mobile stations in the same cell, leading to a decrease in cell throughput. It takes time to normalize the throughput and the transmission power by the retransmission control in a higher layer. Accordingly, it is necessary to instantly detect, by a lower layer, a reduction in throughput caused by an upper layer (application layer), to thereby suppress data transmission at an excessive transmission power.

An object of the disclosures made herein is to provide a technology of promptly suppressing data transmission at an excessive transmission power.

According to an aspect of the disclosures made herein, a mobile station is applied to a mobile radio communication system including a transmission control function. The mobile station includes means for determining a gradient, on data to be uploaded which is input from an upper layer and transmitted through an uplink data channel in a direction toward a base transceiver station, based on a relation in chronological change of transmission data amount per predetermined time; means for judging that, when detecting that the gradient has become smaller than a predetermined threshold value, the transmission data amount is decreased; and means for instructing a lower layer, in a state where Happy bit information transmitted through an uplink control channel continuously takes a first value for requesting an increase of a transmission power, to change the first value to a second value for maintaining or decreasing the transmission power.

According to the disclosed mobile station, it is capable of promptly suppressing data transmission at an excessive transmission power so as to reduce the degree of interference, to thereby promote effective utilization of radio resources.

Other objects, features, and advantages of the present invention will become apparent from reading the following description of an exemplary embodiment with reference to the accompanying drawings and the scope of claims of the invention.

### BRIEF DESCRIPTION OF THE DRAWINGS

FIG. 1 is a diagram for illustrating a mobile radio communication system to be improved;
FIG. 2 is a diagram for illustrating HSUPA transmission procedure in the mobile radio communication system to be improved;
FIG. 3 is a diagram for illustrating problems in the mobile radio communication system to be improved;
FIG. 4 is a diagram for illustrating a configuration and a function of a mobile radio communication system according to an embodiment;
FIG. 5 is a diagram for illustrating a function of a data flow rate monitoring unit in the system according to the embodiment;
FIG. 6 is a diagram for illustrating the function of the data flow rate monitoring unit in the system according to the embodiment;
FIG. 7 is a diagram for illustrating a configuration of the data flow rate monitoring unit in the system according to the embodiment;
FIG. 8 is a diagram for illustrating the function of the data flow rate monitoring unit in the system according to the embodiment;
FIG. 9 is a diagram for illustrating the function of the data flow rate monitoring unit in the system according to the embodiment; and
FIG. 10 is a diagram for illustrating the function of the data flow rate monitoring unit in the system according to the embodiment.

### DESCRIPTION OF EMBODIMENTS

The embodiment of the disclosures made herein will be described below referring to the drawings in detail. The drawings illustrate a preferred embodiment. It should be understood, however, that the embodiment can be implemented by many different embodiments, and is not limited to the embodiment described herein.

### [Configuration and Functions of Mobile Radio Communication System]

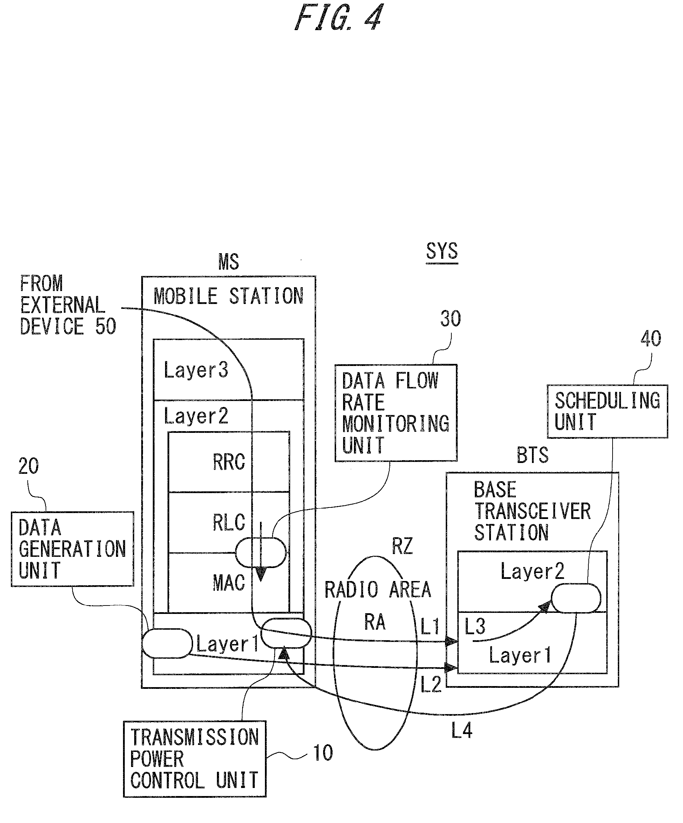

Referring to FIG. 4 which illustrates a system configuration according to an embodiment of the present invention, a mobile radio communication system SYS, which has a high speed uplink packet access (HSUPA) transmission control function, includes a base transceiver station BTS and a mobile station MS. FIG. 4 illustrates, for the sake of simplicity in description, each one of the base transceiver station BTS, the mobile station MS, and a radio zone RZ.

In this embodiment, a description is given of the base transceiver station BTS which includes a base station device and a radio network controller RNC. The base transceiver station BTS covers the radio zone RZ which is referred to as sector or cell, and communicates with the mobile station MS through a radio area RA. Although not shown, the base transceiver station BTS is connected to wired communication networks such as a public telephone network or the Internet, and relays packet data communication to and from the network.

The mobile station MS is a mobile terminal used by a user, and may be any one of a mobile phone terminal such as mobile phone or a personal handy-phone system (PHS), a mobile information terminal such as a personal digital assistant (PDA), and a discrete body or a composite body of an external device such as Bluetooth, as long as the mobile station MS includes a control function unit, a communication function unit, an information input function unit, an information display function unit, an information designating function unit, and an information holding function unit.

The mobile station MS has a hardware configuration which includes the following elements. That is, the control function unit includes a central processing unit (CPU) as a processor, a random access memory (RAM) as a working memory, and a read only memory (ROM) storing various application programs.
Further, the communication function unit includes a radio communication part, the information input function unit includes a tenkey and various function buttons (keys), the information display function unit includes a display, and the information designating function unit includes a pointing part and a cursor-movement part. Still further, the information holding function unit includes a nonvolatile memory storing various kinds of data. The hardware configuration is readily understandable and implementable to those skilled in the art, and therefore the illustration of the configuration is omitted.

In order to logically implement an HSUPA transmission control function to be described later, an HSUPA transmission control program is installed as an application program in the ROM of the control function unit in the mobile station MS. With this configuration, upon receiving a data upload request from a user, the CPU may execute the HSUPA transmission control program loaded on a RAM.

The mobile station MS has a protocol layer configuration including a plurality of layers, such as Layer 1, Layer 2, and Layer 3. Layer 1 mainly performs control for communication through a radio area RA. Layer 2 includes sublayers, namely, a media access control (MAC) layer, a radio link control (RLC) layer, and a radio resource control (RRC) layer, manages the radio resources and radio links, and performs interface control with respect to Layer 1 or Layer 3. Layer 3 performs interface control with respect to an application-enabled external device (Bluetooth) 50. Layer 1 includes a transmission power control unit 10 and a data generation unit 20. A data flow rate monitoring unit 30 is provided between the RLC layer and the MAC layer.

The base transceiver station BTS includes, similarly to the mobile station MS, Layer 1 and Layer 2. Layer 2 of the base transceiver station BTS includes a scheduling unit 40 for controlling transmission power of the mobile station MS based on the Happy bit information and the transmission data amount notified from the mobile station MS.

In the mobile radio communication system SYS, when a user uploads data (user data) from the external device 50 such as Bluetooth, the data is transmitted as uplink data to Layer 1 of the base transceiver station BTS through Layer 3, Layer 2, and Layer 1 in the mobile station MS and further through an enhanced-dedicated physical data channel (E-DPDCH), which is a physical channel (data channel) in the uplink in the direction from the mobile station MS to the base transceiver station BTS in the radio area RA. Reference Symbol L1 denotes a path along which data is uploaded by using Bluetooth as an application connected to the mobile station MS.

The data generation unit 20 of Layer 1 in the mobile station MS generates a Happy bit, and transmits the generated Happy bit to Layer 1 of the base transceiver station BTS simultaneously (in the same phase) with the uploading of data, through E-DPCCH (Enhanced-Dedicated Physical Control Channel), which is a physical channel (control channel) in the uplink in the radio area RA. Reference symbol L2 denotes a flow path of Happy bit information transmitted through the E-DPCCH.

The uplink data to be uploaded and the Happy bit information are notified to the scheduling unit 40 in Layer 2 of the base transceiver station BTS. Reference symbol L3 denotes a flow path of transmission data and Happy bit information from the mobile station MS, in the base transceiver station BTS.

The scheduling unit 40 controls the absolute grant information (AG information) and the relative grant information (RG information) so as to increase the transmission power of the mobile station MS in a case where the Happy bit information indicates "UnHappy (0) and an amount of data is not excessive. Alternatively, the scheduling unit 40 controls the AG information and the RG information so as to maintain or decrease the transmission power of the mobile station MS in a case where the Happy bit information indicates "Happy (1)". Reference symbol L4 denotes a flow of the AG information and the RG information transmitted through an enhanced-absolute grant channel (E-AGCH) and an enhanced-relative grant channel (E-RGCH), which are physical channels in the downlink direction from the base transceiver station BTS to the mobile station MS.

In the mobile station MS, the data flow rate monitoring unit 30 provided between the RLC layer and the MAC layer, which are the sublayers of Layer 2, monitors a data flow rate, which is a data amount per unit time, based on a parameter of an MAC_DATA_REQ command notified from RLC layer to MAC layer. The data flow rate monitoring unit 30 instructs the data generation unit 20 to change the Happy bit information from "UnHappy" to "Happy", in a case where the gradient of the data flow rate becomes smaller than a predetermined threshold value. The Happy bit information thus changed is transmitted from the mobile station MS to the base transceiver station BTS, to thereby suppress data transmission at an excessive transmission power in the mobile station MS.

### [Configuration and Function of Data Flow Rate Monitoring Unit]

Next, with reference to FIGS. 4 to 10, a description is given of a configuration and an HSUPA transmission control function of the data flow rate monitoring unit 30.

As described above with reference to FIG. 4, in the mobile radio communication system SYS, when a user using the mobile station MS uploads data from the external device 50 such as Bluetooth as an application, the data is transmitted as uplink data to Layer 1 of the base transceiver station BTS through Layer 3, Layer 2, and Layer 1 in the mobile station MS and further through the E-DPDCH, which is a physical channel (data channel) in the uplink in the radio area RA.

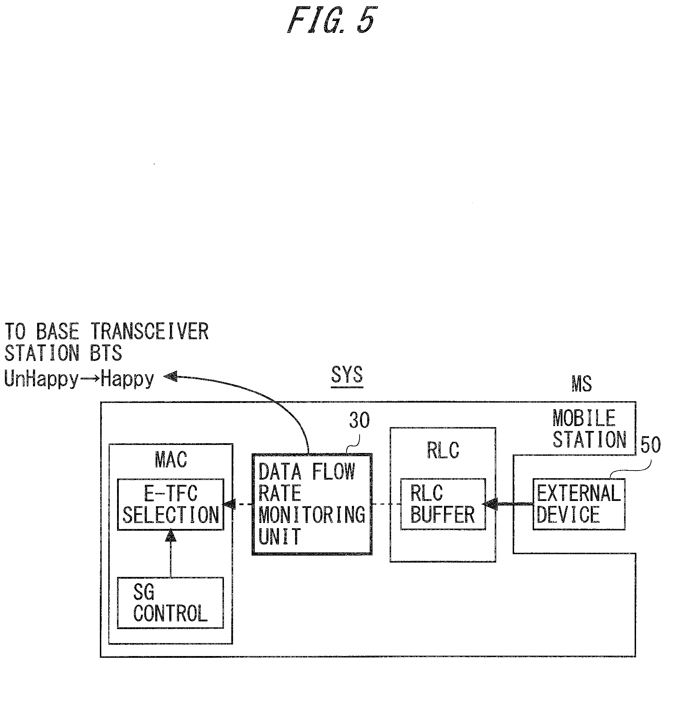

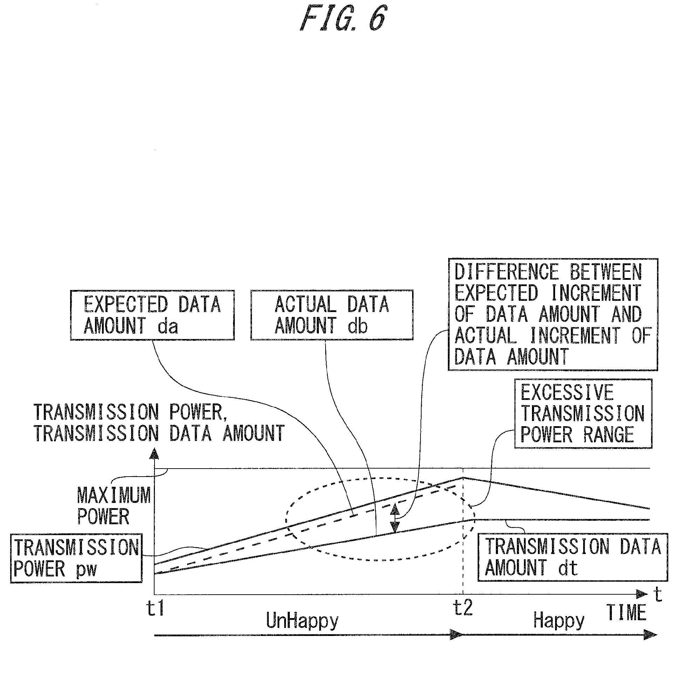

At this time, in the mobile station MS, the data flow rate monitoring unit 30 (see FIG. 5) monitors a transmission data flow rate, which is a transmission data amount flowing from RLC layer to MAC layer per predetermined time (unit time). In an "UnHappy" data transmission state (from time t1 to time t2 of FIG. 6), in a case where the data flow rate monitoring unit 30 has detected, based on a difference in increment dx between an expected data amount da and an actual data amount db, an increment of a transmission data amount dt as being smaller than an expected increment, the data transmission at an excessive transmission power pw needs to be suppressed. For this purpose, the data flow rate monitoring unit 30 instructs the data generation unit 20 (see FIG. 4) to change (switch) the Happy bit information so as to notify "Happy". As a result, the base transceiver station BTS performs relative grant (RG) control on the mobile station MS, and after time t2, a transmission power from the transmission power control unit 10 (see FIG. 4) is controlled to be maintained or decreased. It should be noted that, in FIG. 5, the function of the RLC buffer in the RLC layer, the E-TFC selection function and the SG control function of the MAC layer are similar to those of the above-mentioned mobile radio communication system to be improved.

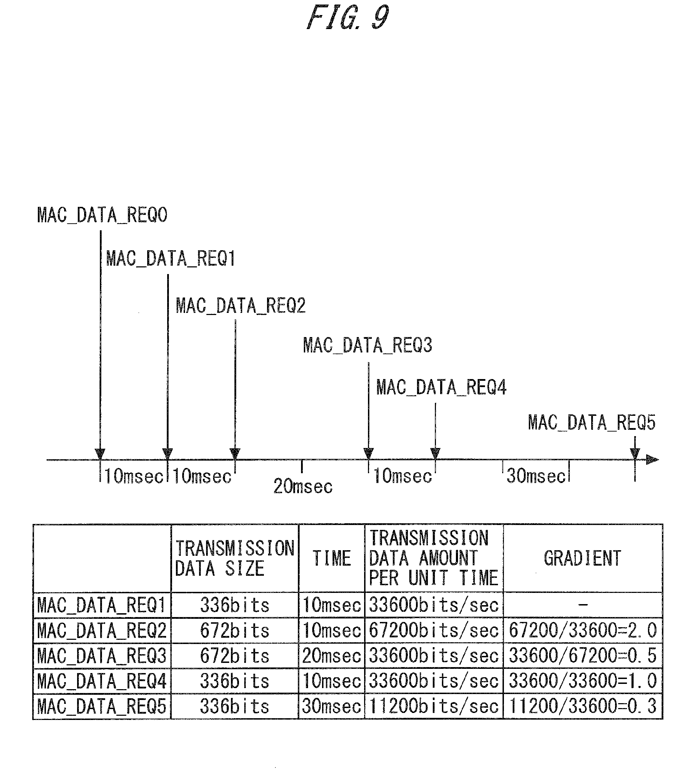

More specifically, the mobile station MS includes the MAC_DATA_REQ command which is to be notified to the MAC layer upon transmission of data from the RLC layer to the MAC layer in Layer 2. The MAC_DATA_REQ command includes a parameter on a transmission data size. FIG. 9 illustrates, as examples of the MAC_DATA_REQ command, specific examples of commands from MAC_DATA_REQ1 to MAC_DATA_REQ5 based on MAC_DATA_REQO. For example, MAC_DATA_REQ1 includes, as a parameter, a transmission data size of 336 bits.

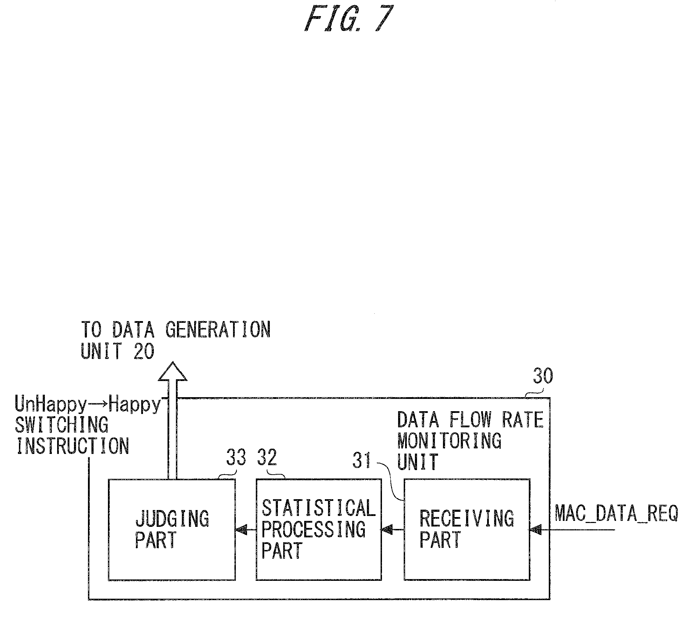

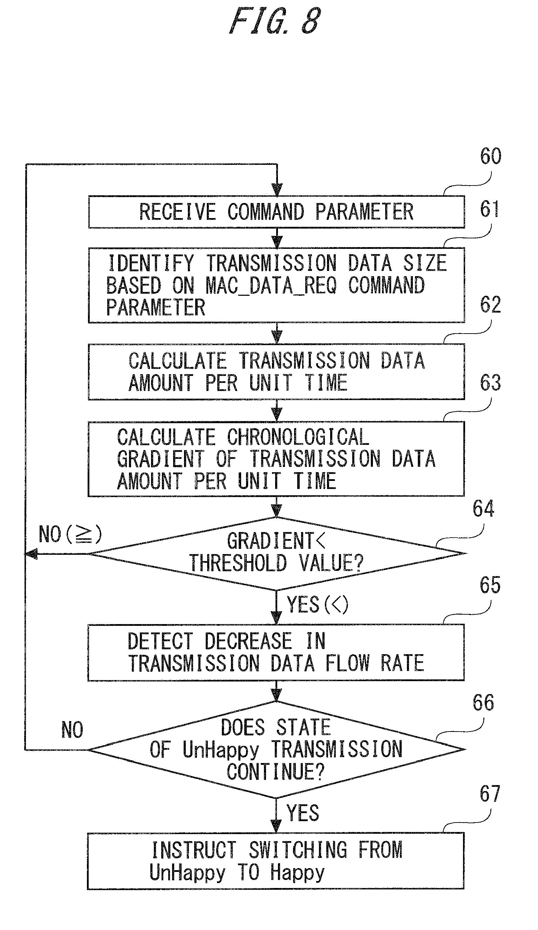

In the data flow rate monitoring unit 30 illustrated in FIG. 7, a receiving part 31 receives a parameter included in the MAC_DATA_REQ command (60 of FIG. 8). A statistical processing part 32 identifies the transmission data size included in the command received by the receiving part 31 (61), and calculates a transmission data amount per unit time (1 sec in this case) (62). For example, MAC_DATA_REQ1 indicates a transmission data size of 336 bits, and is received in 10 msec after MAC_DATA_REQO, and therefore a transmission data amount per unit time is calculated as 33,600 bits/sec.

Further, the statistical processing part 32 plots points of transmission data amounts per unit time in chronological order, and obtains the gradient (63). For example, MAC_DATA_REQ2 indicates a transmission data size of 672 bits, and is received in 10 msec after MAC_DATA_REQ1, and therefore the transmission data amount is calculated as 67, 200 bits/sec. Accordingly, the gradient to be obtained based on a relation between the transmission data amount per unit time of MAC_DATA_REQ1, which is 33,600 bits/sec, and the transmission data amount per unit time of MAC_DATA_REQ 2, which is 67,200 bits/sec, is 67,200/33,600=2.0.

When detecting that gradient is smaller than a predetermined threshold value (64), a judging part 33 detects a reduction in a transmission data amount (transmission data flow rate) per unit time (65), and in a case where "UnHappy" is consecutively transmitted as the Happy bit information (66), the judging part 33 instructs the data generation unit 20 (see FIG. 4) to switch from "UnHappy" to "Happy" (67). For example, if the predetermined threshold value is 0.5, the gradient becomes smaller than 0.5 when MAC_DATA_REQ5 with a gradient of 0.3<0.5 is received. Accordingly, after the reception of MAC_DATA_REQ5, if "UnHappy" transmission state continues, the state is forcedly switched from "UnHappy" to "Happy".

It should be noted that in a case where it is detected in Process 64 that the gradient is equal to or larger than a predetermined threshold value, and it is detected in Process 66 that "Happy" is consecutively transmitted as the Happy bit information, the process returns to Process 60.

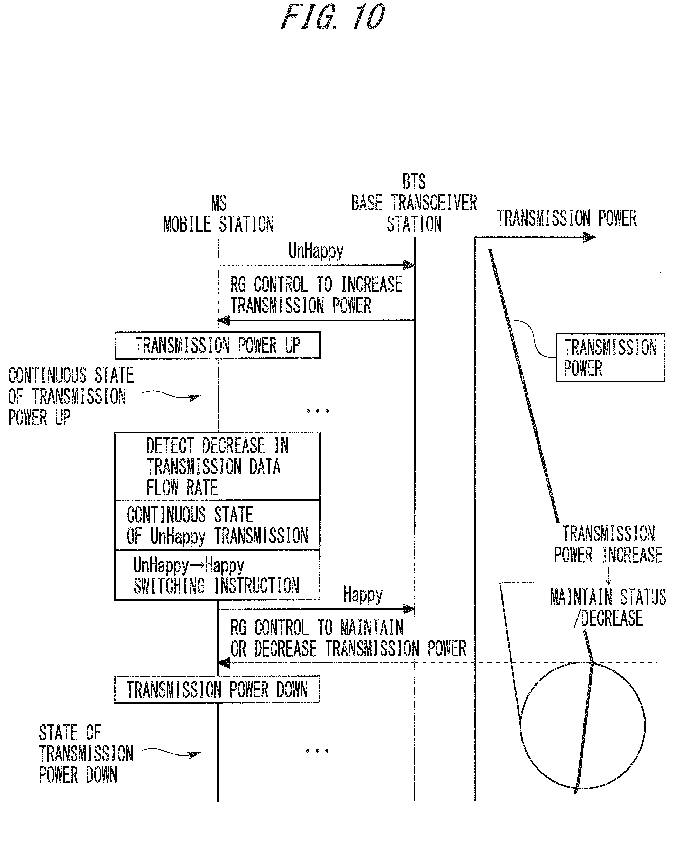

In the mobile station MS which includes HSUPA transmission control function performed by the data flow rate monitoring unit 30 as described above, as in a control sequence illustrated in FIG. 10, in a state where "UnHappy" is continuously transmitted to the base transceiver station BTS to receive RG control to increase a transmission power from the base transceiver station BTS, that is, a continuous state of transmission power UP, when a decrease in a transmission data flow rate is detected, "Happy" is forcedly transmitted as the Happy bit information. In this manner, the base transceiver station BTS performs RG control to maintain or decrease the transmission power in the mobile station MS. As a result, the mobile station MS enters a transmission power DOWN state, where the transmission power in the increasing state is changed to a maintenance state or a decreasing state.

In the manner as described above, data transmission from the mobile station MS at an excessive transmission power is instantly suppressed so as to reduce the degree of interference, to thereby promote effective utilization of radio resources.

### [Modification Example]

The processing in the embodiment described above may be provided as a computer-executable program, and may be provided through a recording medium such as a CD-ROM or a flexible disk, or through telecommunication lines.

Further, the processes in the embodiment described above may be executed in combination by selecting an arbitrary number or all of the processes.

## Claims

1. A mobile station to be applied to a mobile radio communication system including a transmission control function, comprising:
means for determining a gradient, on data to be uploaded which is input from an upper layer and transmitted through an uplink data channel in a direction toward a base transceiver station, based on a relation in chronological change of transmission data amount per predetermined time;
means for judging that, when detecting that the gradient has become smaller than a predetermined threshold value, the transmission data amount is decreased; and
means for instructing a lower layer, in a state where Happy bit information transmitted through an uplink control channel continuously takes a first value for requesting an increase of a transmission power, to change the first value to a second value for maintaining or decreasing the transmission power.

2. The mobile station according to claim 1, further comprising means for calculating the transmission data amount per predetermined time, based on a parameter of MAC_DATA_REQ command notified from a radio link control (RLC) layer to a media access control (MAC) layer of Layer 2.

3. The mobile station according to claim 1 or 2, wherein the uplink data channel and the uplink control channel are an enhanced-dedicated physical data channel (E-DPDCH) and an enhanced-dedicated physical control channel (E-DPCCH), respectively; and
the Happy bit information is 1-bit information indicative of whether or not the transmission power as a radio resource is further available to the mobile station, and the first value and the second value correspond to UnHappy and Happy, respectively.

4. A method of performing a transmission control in a mobile radio communication system, the method executed by a processor, comprising:
determining a gradient, on data to be uploaded which is input from an upper layer and transmitted through an uplink data channel in a direction toward a base transceiver station, based on a relation in chronological change of transmission data amount per predetermined time;
judging that, when detecting that the gradient has become smaller than a predetermined threshold value, the transmission data amount is decreased; and
instructing a lower layer, in a state where Happy bit information transmitted through an uplink control channel continuously takes a first value for requesting an increase of a transmission power, to change the first value to a second value for maintaining or decreasing the transmission power.

5. A program for performing a transmission control in a mobile radio communication system, the program causing a processor to execute:
determining a gradient, on data to be uploaded which is input from an upper layer and transmitted through an uplink data channel in a direction toward a base transceiver station, based on a relation in chronological change of transmission data amount per predetermined time;
judging that, when detecting that the gradient has become smaller than a predetermined threshold value, the transmission data amount is decreased; and
instructing a lower layer, in a state where Happy bit information transmitted through an uplink control channel continuously takes a first value for requesting an increase of a transmission power, to change the first value to a second value for maintaining or decreasing the transmission power.
